(19) Europäisches Patentamt
European Patent Office
Office européen des brevets

(11) **EP 2 568 026 A1**

(12) **EUROPEAN PATENT APPLICATION**


(43) Date of publication:
**13.03.2013 Bulletin 2013/11**

(51) Int Cl.:
***C09J 133/08*** *(2006.01)*

(21) Application number: **12183241.4**

(22) Date of filing: **06.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.09.2011 JP 2011195491**



(71) Applicant: **NITTO DENKO CORPORATION**
**Osaka (JP)**

(72) Inventors:
- **Koso, Masatsugu**
  **Ibaraki-shi, Osaka (JP)**
- **Yonezaki, Kousuke**
  **Ibaraki-shi, Osaka (JP)**

(74) Representative: **Grünecker, Kinkeldey, Stockmair & Schwanhäusser**
**Leopoldstrasse 4**
**80802 München (DE)**


(54) **Aqueous dispersion pressure-sensitive adhesive composition and pressure-sensitive adhesive sheet**


(57) The present invention relates to a pressure-sensitive adhesive composition containing: an aqueous solvent, an acrylic polymer dispersed in the aqueous solvent, a polyisocyanate crosslinking agent, and a tertiary amine as a neutralizing agent, in which the composition has a liquid phase with a pH of less than 10.


FIG. 1

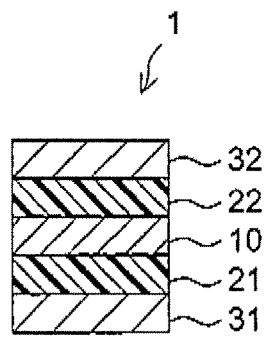


EP 2 568 026 A1

## Description

### TECHNICAL FIELD

The present invention relates to an aqueous dispersion pressure-sensitive adhesive composition and a pressure-sensitive adhesive sheet using the same.

### BACKGROUND ART

A pressure-sensitive adhesive sheet is utilized in various fields of fixing (joining), conveyance, protection, decoration, etc. of articles. Typically, a pressure-sensitive adhesive layer thereof is formed using an acrylic pressure-sensitive adhesive composition. In view of consideration for environmental hygiene, use of an aqueous dispersion acrylic pressure-sensitive adhesive composition using an aqueous solvent as a solvent is desirable. As related art documents related to such an aqueous dispersion acrylic pressure-sensitive adhesive composition and pressure-sensitive adhesive sheet using the same, there are enumerated Patent Documents 1 to 3. Patent Document 4 is a related art regarding a tape-shaped insulating material.

### CITATION LIST

### PATENT DOCUMENTS

Patent Document 1: JP-A-9-157623
Patent Document 2: JP-A-2010-248465
Patent Document 3: JP-A-2010-163526
Patent Document 4: JP-A-2004-231676

### SUMMARY OF THE INVENTION

The acrylic pressure-sensitive adhesive composition may contain, in addition to an acrylic polymer as a base polymer (major pressure-sensitive adhesive component), a crosslinking agent and other minor components according to the need. At the time of preparing an aqueous dispersion acrylic pressure-sensitive adhesive composition, the crosslinking agent is typically added after the synthesis of an acrylic polymer. In general, the pressure-sensitive adhesive composition in which a crosslinking agent is post-added in this way is constituted so as to form a pressure-sensitive adhesive layer having desired adhesiveness by coating the composition on a base material or the like, drying, and applying an aging step for allowing the progress of crosslinking between the polymers to proceed. However, in general aqueous dispersion acrylic pressure-sensitive adhesive compositions, such an aging step is required to be carried out at a relatively high temperature for a long period of time, and therefore there is a case where manufacturing efficiency is conspicuously restricted.

A principal object of the present invention is to provide an aqueous dispersion acrylic pressure-sensitive adhesive composition with excellent aging properties. A related other object of the present invention is to provide a pressure-sensitive adhesive sheet provided with a pressure-sensitive adhesive layer formed of such a pressure-sensitive adhesive composition.

The pressure-sensitive adhesive composition provided by the present invention contains an aqueous solvent and an acrylic polymer dispersed in the aqueous solvent. Specifically, the pressure-sensitive adhesive composition of the present invention is an aqueous emulsion containing an acrylic polymer as a base polymer (aqueous dispersion acrylic pressure-sensitive adhesive composition). This pressure-sensitive adhesive composition further contains a polyisocyanate crosslinking agent and a tertiary amine as a neutralizing agent. In addition, pH as measured on a liquid phase thereof is less than 10.

According to such an aqueous dispersion acrylic pressure-sensitive adhesive composition, since the polyisocyanate crosslinking agent is used in the presence of the tertiary amine as a neutralizing agent, even when an aging step of keeping the composition in a high-temperature environment for a long period of time (typically keeping in an environment of about 80°C for from about 2 to 3 days) is not applied, a pressure-sensitive adhesive layer capable of exhibiting sufficient adhesive force and high-temperature holding power (for example, a holding power at about 60°C) can be formed by, for example, coating the composition on a base material or the like and only drying upon heating for a short period of time as is conventionally done. The pressure-sensitive adhesive composition is preferable from the standpoint of environmental hygiene and also excellent in manufacturing efficiency not only because the aqueous solvent

is used as a medium for diluting the pressure-sensitive adhesive component, but also because the aging step is not required in forming the pressure-sensitive adhesive layer.

In one of preferred embodiments, the acrylic polymer is an acrylic polymer synthesized by means of emulsion polymerization of an alkyl (meth)acrylate as a major monomer and a carboxyl group-containing monomer as a minor monomer. According to the aqueous dispersion pressure-sensitive adhesive composition of such an embodiment, the effects to be brought due to the use of the tertiary amine as a neutralizing agent may be conspicuously exhibited.

The present invention also provides a pressure-sensitive adhesive sheet provided with a pressure-sensitive adhesive layer formed of any one of the aqueous dispersion acrylic adhesive compositions as disclosed herein. Such a pressure-sensitive adhesive sheet is more preferable from the standpoint of environmental hygiene not only because the pressure-sensitive adhesive sheet is formed of an aqueous dispersion pressure-sensitive adhesive composition, but also because it is possible to omit an aging step for keeping the composition in a high-temperature environment over a long period of time in its manufacturing process. The pressure-sensitive adhesive sheet provided with the pressure-sensitive adhesive layer formed of this pressure-sensitive adhesive composition may have adhesive force and holding power comparable to those of pressure-sensitive adhesive sheets provided with a pressure-sensitive adhesive layer formed of a conventional pressure-sensitive adhesive composition through an aging step.

The present invention provides a method for manufacturing a pressure-sensitive adhesive composition comprising a dispersion liquid containing an aqueous solvent and an acrylic polymer dispersed in the aqueous solvent. This method contains a step of preparing a dispersion liquid (aqueous dispersion acrylic polymer) in which an acrylic polymer is dispersed in an aqueous solvent. In addition, this method contains a step of adding a tertiary amine as a neutralizing agent to the dispersion liquid to adjust a pH to less than 10; and a step of post-adding a crosslinking agent. According to the aqueous dispersion pressure-sensitive adhesive composition manufactured by such a method, a pressure-sensitive adhesive sheet having excellent adhesive force and holding power can be manufactured even without applying an aging step after the formation of a pressure-sensitive adhesive layer. In consequence, this manufacturing method may be preferably adopted as a method for manufacturing a pressure-sensitive adhesive composition which is used for the manufacture of any one of the pressure-sensitive adhesive sheets as disclosed herein.

## BRIEF DESCRIPTION OF THE DRAWINGS

FIG. 1 is a cross-sectional view schematically showing one configuration example of a pressure-sensitive adhesive sheet.

FIG. 2 is a cross-sectional view schematically showing another configuration example of a pressure-sensitive adhesive sheet.

FIG. 3 is a cross-sectional view schematically showing another configuration example of a pressure-sensitive adhesive sheet.

FIG. 4 is a cross-sectional view schematically showing another configuration example of a pressure-sensitive adhesive sheet.

FIG. 5 is a cross-sectional view schematically showing another configuration example of a pressure-sensitive adhesive sheet.

FIG. 6 is a cross-sectional view schematically showing another configuration example of a pressure-sensitive adhesive sheet.

## DETAILED DESCRIPTION OF THE INVENTION

Preferred embodiments of the present invention are hereunder described. Incidentally, technical matters necessary for carrying out the present invention, other than those specifically referred to in the present specification, may be grasped as design matters for a person skilled in the art that are based on the related art in the pertinent field. The present invention can be carried out on the basis of the contents as disclosed herein and common general technical knowledge in the pertinent field. In addition, in the following description, the same reference numerals are assigned to members or sites producing similar effects, and duplicated descriptions are sometimes omitted or simplified.

The aqueous dispersion acrylic pressure-sensitive adhesive composition which is provided by the present invention can be prepared by blending an acrylic polymer emulsion of an acrylic polymer dispersed in an aqueous solvent with a tertiary amine as a neutralizing agent such that a pH of a liquid phase of the emulsion is less than 10 and further blending with a crosslinking agent.

Here, the aqueous solvent includes water and solvents having good compatibility with water. Examples of these solvents having good compatibility with water include ether solvents such as polyoxyethylene dialkyl ether, polyoxypropylene dialkyl ether and polyoxyethylene monoalkyl ether, and alcohol solvents such as methanol, ethanol, and isopropyl alcohol.

As the crosslinking agent, use can be made of a polyisocyanate crosslinking agent having two or more isocyanate groups per molecule (which may be protective group-containing isocyanate groups such as an isocyanate regenerative functional group of an embodiment in which an isocyanate group is temporarily protected by means of, for example, a blocking agent treatment, oligomerization, etc.).

Examples of such a polyisocyanate crosslinking agent include aromatic polyisocyanates such as tolylene diisocyanate and xylene diisocyanate; alicyclic polyisocyanates such as isophorone diisocyanate; and aliphatic polyisocyanates such as hexamethylene diisocyanate.

More specifically, examples thereof include lower aliphatic polyisocyanates such as butylene diisocyanate and hexamethylene diisocyanate; alicyclic polyisocyanates such as cyclopentylene diisocyanate, cyclohexylene diisocyanate, and isophorone diisocyanate; aromatic diisocyanates such as 2,4-tolylene diisocyanate, 4,4'-diphenylmethane diisocyanate, xylylene diisocyanate, and polymethylene polyphenyl diisocyanate; isocyanate adducts such as a trimethylolpropane/tolylene diisocyanate trimer adduct (a trade name: CORONATE L, manufactured by Nippon Polyurethane Industry Co., Ltd.), a trimethylolpropane/hexamethylene diisocyanate trimer adduct (a trade name: CORONATE HL, manufactured by Nippon Polyurethane Industry Co., Ltd.), and an isocyanurate body of hexamethylene diisocyanate (a trade name: CORONATE HX, manufactured by Nippon Polyurethane Industry Co., Ltd.); polyisocyanates such as polyether polyisocyanates and polyester polyisocyanates; adducts of such a polyisocyanate and a polyol; and polyisocyanates obtained through polyfunctionalization of such a polyisocyanate by an isocyanurate bond, a biuret bond, an allophanate bond, or the like.

From the viewpoint of the use for an aqueous dispersion pressure-sensitive adhesive composition, a self-emulsion polyisocyanate, an aqueous-dispersible polyisocyanate, and an aqueous-dispersed block isocyanate may be preferably employed as the isocyanate crosslinking agent used in the present invention.

Commercially available products can be used as such an isocyanate crosslinking agent. As for such a commercially available product, examples of the aqueous-dispersible polyisocyanate include trade names: "BURNOCK DNW-5000", "BURNOCK DNW-5010", "BURNOCK DNW-5100", "BURNOCK DNW-5200", and "BURNOCK DNW-5500", all of which are manufactured by DIC Corporation. In addition, examples of the self-emulsion polyisocyanate include trade names: "AQUANATE 100", "AQUANATE 105", "AQUANATE 110", "AQUANATE 120", "AQUANATE 130", "AQUANATE 200", and "AQUANATE 210", all of which are manufactured by Nippon Polyurethane Industry Co., Ltd.; and trade names: "TAKENATE WD-220", "TAKENATE WD-240", "TAKENATE WD-720", "TAKENATE WD-725", "TAKENATE WD-726", "TAKENATE WD-730", "TAKENATE WB-700", TAKENATE WB-720", and "TAKENATE WB-920", all of which are manufactured by Mitsui Chemicals Polyurethanes, Inc. Examples of the aqueous-dispersed block isocyanate include trade names: "ELASTRON BN-04", "ELASTRON BN-11", "ELASTRON BN-27", "ELASTRON BN-69", and "ELASTRON BN-77", all of which are manufactured by Daiichi Kogyo Seiyaku Co., Ltd.

The pressure-sensitive adhesive composition of the present invention may also be blended with a crosslinking agent other than the polyisocyanate crosslinking agent. For example, the polyisocyanate crosslinking agent and another crosslinking agent can be mixed and used. As the other crosslinking agent, use can be made of generally used crosslinking agents in the field of an aqueous dispersion pressure-sensitive adhesive composition, such as epoxy crosslinking agents, oxazoline crosslinking agents, aziridine crosslinking agents, and metal chelate crosslinking agents. The technologies as disclosed herein may be preferably carried out in an embodiment which does not substantially contain a crosslinking agent other than the polyisocyanate crosslinking agent.

Such a crosslinking agent has, in addition to the effect for achieving crosslinking upon a reaction with a functional group contained in the raw material monomer of the acrylic polymer, an effect for reducing a water-soluble component upon a reaction with a homopolymer, etc. contained in the copolymer emulsion (for example, a homopolymer of a carboxyl group-containing monomer, obtained when a carboxyl group-containing monomer is polymerized in water without being copolymerized in a micell of an emulsifier at the time of emulsion polymerization, or a copolymer close to a homopolymer, etc.).

An amount of the crosslinking agent to be blended in the aqueous dispersion pressure-sensitive adhesive composition is preferably from about 0.01 parts by weight to 10 parts by weight based on 100 parts by weight of the raw material monomer used for the synthesis of the acrylic polymer. The blending amount of the crosslinking agent is more preferably from about 0.05 to 8 parts by weight. According to the technologies as disclosed herein, even when the blending amount of the crosslinking agent is less than 1.4 parts by weight (for example, not more than 1.3 parts by weight, and typically not more than 1.0 part by weight), and even when an aging step is not applied, sufficient crosslinking between polymers is realized at the time of forming a pressure-sensitive adhesive layer due to an effect of the tertiary amine blended as a neutralizing agent, and a pressure-sensitive adhesive sheet exhibiting favorable adhesive force and holding power can be realized. When the blending amount of the crosslinking agent is too small, there is a concern that cohesive force of the pressure-sensitive adhesive layer is insufficient, so that cohesive breakage takes place. When the blending amount of the crosslinking agent is too large, there is a concern that the pressure-sensitive adhesive layer is excessively cured, so that a sufficient adhesive force is not realized, or there is a concern that the pressure-sensitive adhesive layer is deteriorated in appearance due to cloudiness or the like, or contaminates an adherend.

As the neutralizing agent, use can be made of one or two or more kinds of tertiary amines. In general, the tertiary amine has a structure represented by the following formula (I). Those represented by formula (I) wherein each of $R_1$, $R_2$, and $R_3$ independently represents an alkyl group having a carbon atom number of from 1 to 11 can be preferably used. Each of the alkyl groups may be linear or branched, and may be a saturated alkyl group or an unsaturated alkyl group. Furthermore, each of the alkyl group may be an alkyl group containing a hetero atom such as nitrogen atom and oxygen atom. The tertiary amine preferably has solubility in an aqueous solvent (typically water) to be used of 1 g/100 g or more at a temperature of 25°C. For example, a lower alkylamine which has an alkyl group with a carbon number of from 1 to 4 can be more preferably used. In particular, the use of a lower alkylamine which has an alkyl group with a carbon number of from 1 to 2 is suitable. Particularly preferred examples of the tertiary amine include triethylamine (TEA) and trimethylamine (TMA).

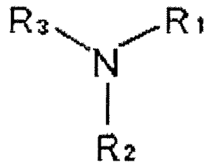

Formula (I)

An amount of the tertiary amine blended as a neutralizing agent in the aqueous dispersion pressure-sensitive adhesive composition may be properly controlled such that a pH of a liquid phase of the acrylic polymer emulsion is less than 10. The pH of the liquid phase is preferably from about 5 to 9, and more preferably from about 6 to 9. Typically, the tertiary amine is added as an aqueous solution having a concentration of from about 5% by weight to 50% by weight. Incidentally, the pH of the liquid phase of the pressure-sensitive adhesive composition after the addition of the crosslinking agent is substantially equal to the pH of the liquid phase before the addition of the crosslinking agent as adjusted with the neutralizing agent.

Though a mechanism in which the above mentioned effects are realized when the aqueous dispersion pressure-sensitive adhesive composition as described herein contains a tertiary amine as a neutralizing agent at a pH of a prescribed range is not elucidated yet, for example, the following may be considered. That is, since ammonia has nucleophilicity, it may cause a side reaction with a functional group (typically isocyanate group) of the crosslinking agent, whereas since a tertiary amine is poor in nucleophilicity due to steric hindrance of the surroundings of the nitrogen atom thereof, it hardly causes a side reaction with the crosslinking agent, so that it may suitably exhibit a function (neutralizing effect) as a base. In addition, a tertiary amine may exhibit a catalytic effect for accelerating the crosslinking reaction with the crosslinking agent at a pH of the prescribed range mentioned above. According to this, even when an aging step is not applied, crosslinking reaction may sufficiently proceed (a difference of gel fractions before and after aging may be less than 10%). Similarly, in the case where a primary amine or a secondary amine is used in place of the tertiary amine, neutralizing effect may be achieved. However, nucleophilic reaction and neutralizing effect compete, so that the efficiency of crosslinking reaction may be lowered. In addition, when the pH falls outside the prescribed range mentioned above, it is considered that crosslinking reaction is prevented or the like, so that even when an aging step is applied, the crosslinking reaction does not proceed.

The above-mentioned pressure-sensitive adhesive composition has an embodiment in which the crosslinking agent and the neutralizing agent are blended in a dispersion liquid containing an aqueous solvent and an acrylic polymer dispersed in the aqueous solvent. The aqueous solvent as referred to herein is a terminology including water and a mixed solvent composed mainly of water. The acrylic polymer preferably occupies 40% by weight or more (typically from 40% by weight to 95% by weight), and more preferably occupies 50% by weight or more (typically from 50% by weight to 90% by weight, for example, from 55% by weight to 85% by weight) of a non-volatile content contained in the pressure-sensitive adhesive composition (pressure-sensitive adhesive layer-forming component, which will be hereinafter also referred to as "pressure-sensitive adhesive"). In addition, a weight proportion of the acrylic polymer occupying the pressure-sensitive adhesive is typically not more than 95% by weight, and in general, preferably not more than 90% by weight (for example, not more than 85% by weight). In the case where the weight proportion of the acrylic polymer occupying the pressure-sensitive adhesive is too large or too small, there is a concern that a balance of the adhesive characteristics easily breaks.

The acrylic polymer can be synthesized by means of polymerization (typically emulsion polymerization) of raw material monomers containing at least an alkyl (meth)acrylate as a major monomer (in other words, a monomer main component, that is, a component occupying 50% by weight or more, and typically from 50% by weight to 99.8% by weight when a total amount of monomers constituting the acrylic polymer (herein also referred to as "total monomer component") is defined as 100% by weight) and a carboxyl group-containing monomer as a minor monomer. In one

preferred embodiment, the proportion of the alkyl (meth)acrylate (in the case of using two or more kinds of alkyl (meth) acrylates, a total amount thereof is meant) is preferably 70% by weight or more and not more than 99.5% by weight, and typically 80% by weight or more and not more than 99% by weight (more preferably 90% by weight or more and not more than 99% by weight, for example, 95% by weight or more and not more than 97% by weight) of the total monomer component. Usually, a monomer composition in the monomer raw materials is generally corresponding to a copolymerization composition (copolymerization proportion) of the acrylic polymer obtained by polymerizing the monomer raw materials. When the proportion of the alkyl (meth)acrylate occupying the total monomer component is too large, there is a concern that anchoring properties against a base material of the pressure-sensitive adhesive layer or emulsion stability is lowered, or staining properties on an adherend become high. When the proportion of the alkyl (meth)acrylate is too small, there is a concern that adhesiveness or removability of the pressure-sensitive adhesive layer are lowered.

Incidentally, the term "(meth)acrylate" as referred to in this specification has meanings comprehensively including acrylate and methacrylate. Similarly, the term "(meth)acryloyl" has meanings comprehensively including acryloyl and methacryloyl, and the term "(meth)acryl" has meanings comprehensively including acryl and methacryl.

As the alkyl (meth)acrylate, one or two or more members selected from (meth)acrylic acid esters of an alkyl alcohol having a carbon number of from 2 to 16 (such a range of carbon number will be hereunder expressed as "$C_{2-16}$") can be used preferably. The alkyl group may be linear or branched, or may be alicyclic. More preferably, a $C_{2-10}$ alkyl (meth)acrylate (for example, a $C_{4-8}$ alkyl (meth)acrylate) may be used.

Specific examples of the $C_{2-16}$ alkyl (meth)acrylate include ethyl (meth)acrylate, n-propyl (meth)acrylate, isopropyl (meth)acrylate, n-butyl (meth)acrylate, isobutyl (meth)acrylate, s-butyl (meth)acrylate, t-butyl (meth)acrylate, n-pentyl (meth)acrylate, isoamyl (meth)acrylate, neopentyl (meth)acrylate, n-hexyl (meth)acrylate, n-heptyl (meth)acrylate, n-octyl (meth)acrylate, isooctyl (meth)acrylate, 2-ethylhexyl (meth)acrylate, n-nonyl (meth)acrylate, isononyl (meth)acrylate, n-decyl (meth)acrylate, isodecyl (meth)acrylate, undecyl (meth)acrylate, dodecyl (meth)acrylate, tridecyl (meth) acrylate, tetradecyl (meth)acrylate, pentadecyl (meth)acrylate, and hexadecyl (meth)acrylate. An alicyclic alkyl (meth) acrylate such as cyclohexyl (meth)acrylate, bornyl (meth)acrylate, and isobornyl (meth)acrylate may be also used. A blending ratio of the alkyl acrylate and the alkyl methacrylate (alkyl acrylate/alkyl methacrylate) is not particularly limited, and for example, it can be made from about 100/0 to 30/70 (preferably from 100/0 to 50/50) in terms of a weight ratio. As especially preferably alkyl (meth)acrylates, butyl acrylate (BA) and 2-ethylhexyl acrylate (2EHA) are exemplified. For example, BA may occupy substantially the whole of a total amount of the alkyl (meth)acrylate to be used.

As the minor monomer constituting the acrylic polymer, a carboxyl group-containing monomer is preferably used. The carboxyl group-containing monomer can form a protective layer on the surfaces of acrylic polymer-containing emulsion particles and exhibit an effect for preventing shear failure of the particles from occurring (stability against shear failure (mechanical stability)). This effect may be more enhanced by neutralizing the carboxyl group with a base. The carboxyl group further reacts with a crosslinking agent to give a crosslinking point for forming a bond between polymers to the acrylic polymer. Furthermore, the carboxyl group may enhance adhesion (anchoring properties) to a base material.

Examples of the carboxyl group-containing monomer include ethylenically unsaturated dicarboxylic acids such as acrylic acid (AA), methacrylic acid (MAA), itaconic acid, maleic acid, fumaric acid, crotonic acid, carboxyethyl acrylate, and carboxypentyl acrylate; and ethylenically unsaturated dicarboxylic acid anhydrides such as maleic anhydride and itaconic anhydride. In particular, acrylic acid is preferably used. When acrylic acid is used, a relative concentration of acrylic acid on the emulsion particle surface becomes high, whereby a protective layer with a higher density can be formed.

A proportion of the carboxyl group-containing monomer is preferably 0.5% by weight or more and not more than 30% by weight, and more preferably, for example, about 1% by weight or more and not more than about 20% by weight (for example, 1% by weight or more and not more than 10% by weight) of the total monomer component. Typically, the proportion of the carboxyl group-containing monomer can be made from about 2% by weight to 5% by weight. When the amount of the carboxyl group-containing monomer is too large, since water solubility becomes high, there is a concern that the polymerization takes place in a solvent (typically water) but not in a micell, and viscosity of the obtained pressure-sensitive adhesive composition becomes too high. In addition, there is a concern that the pressure-sensitive adhesive layer formed using the pressure-sensitive adhesive composition is easy to take an interaction with a functional group on the surface of an adherend, and after bonding, adhesive force gradually increases, so that it becomes difficult to be released from the adherend. When the amount of the carboxyl group-containing monomer is too small, mechanical stability of emulsion particles is liable to be lowered. Furthermore, adhesion (anchoring properties) to a base material of the pressure-sensitive adhesive layer is lowered, and adhesive deposit is liable to occur at the time of releasing.

For the synthesis of the acrylic polymer, a hydroxyl group-containing vinyl monomer may be used as an arbitrary monomer. Examples of the hydroxyl group-containing vinyl monomer include 2-hydroxyethyl (meth)acrylate, 2-hydroxypropyl (meth)acrylate, 2-hydroxybutyl (meth)acrylate, and 4-hydroxybutyl (meth)acrylate.

In the case of using a hydroxyl group-containing vinyl monomer as an arbitrary monomer, a proportion of the hydroxyl group-containing vinyl monomer is preferably from about 0.01% by weight to 20% by weight (more preferably from 0.03% by weight to 15% by weight) of the total monomer component The hydroxyl group may act as a crosslinking point for forming a bond between polymers. When the pressure-sensitive adhesive composition contains a hydroxyl

group-containing vinyl monomer, the hydroxyl group, for example, reacts with an isocyanate group to achieve crosslinking between polymers, whereby a pressure-sensitive adhesive layer having an excellent balance among adhesive force, holding power, cohesive force suitable for removability, and the like can be formed. An embodiment where the pressure-sensitive adhesive composition does not substantially contain a hydroxyl group-containing vinyl monomer as an arbitrary component may be adopted, too.

For the purpose of giving desired characteristics to the pressure-sensitive adhesive layer, a monomer other than the above-mentioned essential monomer and arbitrary monomer may also be used in combination. Cohesive force of the pressure-sensitive adhesive layer may be enhanced by, for example, using an amide group-containing monomer such as N,N-diethylacrylamide and N-isopropylacrylamide in an amount of from about 0.1% by weight to 10% by weight of the total monomer component. In addition, refractive index or rework properties can be adjusted at a desired level by using an aryl (meth)acrylate such as phenyl (meth)acrylate, a vinyl ester such as vinyl acetate and vinyl propionate, a styrene monomer such as styrene, or the like, independently in an amount of from about 0.1% by weight to 5% by weight of the total monomer component. Alternatively, crosslinking within the emulsion particles may be accelerated to enhance cohesive force by using an epoxy-containing monomer such as glycidyl (meth)acrylate, a polyfunctional monomer such as trimethylolpropane tri(meth)acrylate and divinylbenzene, or the like, independently in an amount of from about 0.01% by weight to 2.0% by weight of the total monomer component. Alternatively, such other monomer may not be substantially used.

As a method for polymerizing such monomers to synthesize an acrylic polymer, a known or conventionally used polymerization method can be adopted. Above all, an emulsion polymerization method can be preferably adopted. As a monomer feeding method at the time of conducting emulsion polymerization, a batchwise charging system of feeding all of monomer raw materials at once; a continuous feeding (dropping) system; a divided feeding (dropping) system, and the like can be properly adopted. There may be adopted a method in which a part or the whole of the monomer (typically the whole of the monomer) is previously mixed with an aqueous solvent (typically, an appropriate amount of an emulsifier is used in combination) and emulsified, and the emulsion liquid (monomer emulsion) is fed batchwise, continuously or dividedly into a reactor. A polymerization temperature can be properly chosen depending upon the kind of a monomer to be used, the kind of a polymerization initiator, and the like, and it can be made, for example, from about 20°C to 100°C (typically from 40°C to 80°C).

According to emulsion polymerization, a polymerization reaction liquid in an emulsion form in which the acrylic polymer is dispersed in water can be obtained. As the aqueous dispersion acrylic polymer in the technologies as disclosed herein, an emulsion polymerization reaction liquid or one obtained by subjecting this reaction liquid to an appropriate post-treatment can be preferably used. Alternatively, use can be also made of an aqueous dispersion acrylic polymer prepared by synthesizing an acrylic polymer utilizing a polymerization method other than emulsion polymerization method (for example, solution polymerization, photopolymerization, bulk polymerization, etc.) and dispersing the resulting polymer in water in the presence of an appropriate emulsifier.

As the emulsifier which is preferably used at the time of subjecting the monomer raw material to emulsion polymerization or at the time of dispersing an acrylic polymer obtained by other method in water, use can be made of all of a radical polymerizable functional group-free emulsifier (hereinafter also referred to as "non-reactive emulsifier") and a radical polymerizable emulsifier (reactive emulsifier) having a structure in which a radical polymerizable group (propenyl group, etc.) is introduced into an anionic or nonionic emulsifier. Suitably, a non-reactive emulsifier is used. Examples of such a non-reactive emulsifier include anionic emulsifiers and nonionic emulsifiers.

Examples of the anionic emulsifier include alkyl sulfate type anionic emulsifiers such as sodium laurylsulfate, ammonium laurylsulfate, and potassium laurylsulfate; polyoxyethylene alkyl ether sulfate type anionic emulsifiers such as sodium polyoxyethylene lauryl ether sulfate; polyoxyethylene alkyl phenyl ether sulfate type anionic emulsifiers such as ammonium polyoxyethylene lauryl phenyl ether sulfate and sodium polyoxyethylene lauryl phenyl ether sulfate; sulfonate type anionic emulsifiers such as sodium dodecylbenzenesulfonate; and sulfosuccinate type anionic emulsifiers such as disodium lauryl sulfosuccinate and disodium polyoxyethylene lauryl sulfosuccinate.

Examples of the nonionic emulsifier include polyoxyethylene alkyl type nonionic emulsifiers; polyoxyethylene alkyl ether type nonionic emulsifiers such as polyoxyethylene lauryl ether; polyoxyethylene glycol type nonionic emulsifiers; polyoxyethylene polyoxypropylene glycol type nonionic emulsifiers; polyoxyethylene alkyl phenyl ether type nonionic emulsifiers such as polyoxyethylene lauryl phenyl ether; and polyoxyethylene fatty acid esters.

As the reactive emulsifier, use can be made of anionic reactive emulsifiers and nonionic/anionic reactive emulsifiers having a radical polymerizable functional group such as vinyl group, propenyl group, isopropenyl group, vinyl ether group (vinyloxy group), and aryl ether group (aryloxy group). The anionic reactive emulsifier has a structure in which a radical polymerizable functional group is introduced into an anionic emulsifier. The nonionic/anionic reactive emulsifier has a structure (or corresponds to this structure) in which a radical polymerizable functional group (radical reactive group) such as propenyl group and aryl ether group is introduced into a nonionic/anionic emulsifier (anionic emulsifier having a nonionic hydrophilic group). Specific examples of the nonionic/anionic emulsifier include a sodium polyoxyethylene alkyl ether sulfate, an ammonium polyoxyethylene alkyl phenyl ether sulfate, a sodium polyoxyethylene

alkyl phenyl ether sulfate, and a sodium polyoxyethylene alkyl sulfosuccinate. For example, in the case where it is intended to reduce the amount of emulsifier remaining in the pressure-sensitive adhesive composition, an emulsifier having a radical polymerizable functional group may be preferably used.

These emulsifiers can be used solely or in combination of two or more kinds thereof. A use amount of the emulsifier is, for example, suitably chosen within the range of from about 0.1 parts by weight to 5 parts by weight (preferably from 0.5 parts by weight to 3 parts by weight) based on 100 parts by weight of the acrylic polymer in a solids content basis. When the use amount of the emulsifier is too large, there is a concern that cohesive force of the pressure-sensitive adhesive layer is lowered, thereby likely contaminating an adherend, or contamination of an adherend due to the emulsifier per se is caused. When the use amount of the emulsifier is too small, there is a concern that stability of the emulsion is lowered.

The polymerization initiator which is used at the time of polymerization can be properly selected among known or conventionally used polymerization initiators depending upon the kind of the polymerization method. For example, in the emulsion polymerization method, an azo polymerization initiator may be preferably used. Specific examples of the polymerization initiator include azo compounds such as 2,2'-azobisisobutyronitrile, 2,2'-azobis(2-amidinopropane) dihydrochloride, 2,2'-azobis[2-(5-methyl-2-imidazolin-2-yl)propane] dihydrochloride, 2,2'-azobis[N-(2-carboxyethyl)-2-methylpropioneamidine] hydrate, 2,2'-azobis(2-methylpropioneamidine) disulfate, and 2,2'-azobis(N,N'-dimethyleneisobutylamidine); persulfates such as potassium persulfate and ammonium persulfate; and peroxides such as benzoyl peroxide, t-butyl hydroperoxide, and hydrogen peroxide. Furthermore, other examples of the polymerization initiator include redox initiators made of a combination of a peroxide and a reductant. Examples of such a redox initiator include a combination of a peroxide (hydrogen peroxide, etc.) and ascorbic acid, a combination of a peroxide (hydrogen peroxide, etc.) and an iron(II) salt, and a combination of a persulfate and sodium hydrogen sulfite.

These polymerization initiators can be used solely or in combination of two or more kinds thereof. A use amount of the polymerization initiator may be a usual used amount, and for example, it can be chosen within the range of from about 0.005 parts by weight to 1 part by weight (preferably from 0.01 parts by weight to 1 part by weight, and more preferably from 0.02 parts by weight to 0.5 parts by weight) based on 100 parts by weight of the total monomer component.

For the above-mentioned polymerization, various conventionally known chain transfer agents (which may also be grasped as molecular weight modifiers or polymerization degree modifiers) can be used according to the need. Such a chain transfer agent may be one or two or more members selected from mercaptans such as n-lauryl mercaptan, t-lauryl mercaptan, glycidyl mercaptan, and 2-mercaptoethanol. Above all, the use of t-laryl mercaptan is preferable. A use amount of the chain transfer agent can be, for example, made from about 0.001 parts by weight to 0.5 parts by weight based on 100 parts by weight of the total monomer component This use amount may also be from about 0.02 parts by weight to 0.05 parts by weight.

The pressure-sensitive adhesive composition may contain a tackifier according to the need. Examples of the tackifier include rosin resins, terpene resins, aliphatic petroleum resins, aromatic petroleum resins, copolymerization petroleum resins, alicyclic petroleum resins, xylene resins, and elastomers.

The pressure-sensitive adhesive composition may contain various other additives which are used in the field of an aqueous pressure-sensitive adhesive composition according to the need. Examples of such an additive include a leveling agent, a plasticizer, a filler, a coloring agent such as a pigment and a dye, a stabilizer, an antiseptic, and an anti-aging agent. As for such various additives, conventionally known one can be used in the usual way, and a detail description thereof is omitted because these additives do not particularly characterize the present invention.

The present invention also provides a pressure-sensitive adhesive sheet provided with a pressure-sensitive adhesive layer formed of any one of the pressure-sensitive adhesive compositions as disclosed herein. The pressure-sensitive adhesive layer can be formed by giving (typically coating) any one of the aqueous dispersion acrylic pressure-sensitive adhesive compositions as disclosed herein onto a base material (support), followed by heating for a short period of time (which may be included in drying step; for example, applying a drying step of keeping it at a temperature of from about 80°C to 120°C for about 3 minutes). According to the technologies disclosed herein, crosslinking may sufficiently proceed by means of this heating step for a short period of time, and therefore, even when an aging step is not separately carried out, a pressure-sensitive adhesive sheet having excellent adhesive force and holding power can be realized.

The pressure-sensitive adhesive composition may be coated on a base material using a conventional coater such as a gravure roll coater, a reverse roll coater, a kiss roll coater, a dip roll coater, a bar coater, a knife coater, and a spray coater.

The pressure-sensitive adhesive sheet formed as above may be a base material-equipped pressure-sensitive adhesive sheet in a form in which such a pressure-sensitive adhesive layer is provided on one or both surfaces of a base material (support), or may be a base material-less pressure-sensitive adhesive sheet in a form in which the pressure-sensitive adhesive layer is held by a release liner (which may also be grasped as a base material provided with a release surface). A concept of the pressure-sensitive adhesive sheet as referred to herein may include those called a pressure-sensitive adhesive tape, a pressure-sensitive adhesive label, a pressure-sensitive adhesive film, and the like. Incidentally,

though the pressure-sensitive adhesive layer is typically formed continuously, it should not be construed that the pressure-sensitive adhesive layer is limited to such embodiments. For example, the pressure-sensitive adhesive layer may also be formed in a regular or random pattern such as a dotted pattern and a stripe pattern. In addition, the pressure-sensitive adhesive sheet provided by the present invention may be in a roll form, or may be in a single sheet form. Alternatively, the pressure-sensitive adhesive sheet may be in a form processed in a shape of every sort and kind, too.

The pressure-sensitive adhesive sheet as disclosed herein may have a cross-sectional structure schematically shown in, for example, each of FIGs. 1 to 6. Of these, each of FIGs. 1 and 2 is a configuration example of a base material-equipped pressure-sensitive adhesive double-coated sheet. A pressure-sensitive adhesive sheet 1 shown in FIG. 1 has a configuration in which pressure-sensitive adhesive layers 21 and 22 are provided on the both surfaces (all of which are non-releasable surface) of a base material 10, and these pressure-sensitive adhesive layers are protected by release liners 31 and 32, respectively, in each of which at least the pressure-sensitive adhesive layer side thereof is a release surface. A pressure-sensitive adhesive sheet 2 shown in FIG. 2 has a configuration in which pressure-sensitive adhesive layers 21 and 22 are provided on the both surfaces (all of which are non-releasable surface) of a base material 10, and one of the pressure-sensitive adhesive layers, the pressure-sensitive adhesive layer 21, is protected by a release liner 31, the both surfaces of which are a release surface. The pressure-sensitive adhesive sheet 2 of this kind can take a configuration in which by winding up the pressure-sensitive adhesive sheet to bring the other pressure-sensitive adhesive layer 22 into contact with a rear surface of the release liner 31, the pressure-sensitive adhesive layer 22 is also protected by the release liner 31.

Each of FIGs. 3 and 4 is a configuration example of a base material-less pressure-sensitive adhesive double-coated sheet. A pressure-sensitive adhesive sheet 3 shown in FIG. 3 has a configuration in which both surfaces 21A and 21B of a base material-less pressure-sensitive adhesive layer 21 are protected by release liners 31 and 32, respectively, in each of which at least the pressure-sensitive adhesive layer side thereof is a release surface. A pressure-sensitive adhesive sheet 4 shown in FIG. 4 has a configuration in which one surface (pressure-sensitive adhesive surface) 21A of a base material-less pressure-sensitive adhesive layer 21 is protected by a release liner 31, the both surfaces of which are release surface. The pressure-sensitive adhesive sheet 4 of this kind can take a configuration in which by winding up it to bring the other surface (pressure-sensitive adhesive surface) 21B of the pressure-sensitive adhesive layer 21 into contact with a back surface of the release liner 31, the other surface 21B is also protected by the release liner 31.

Each of FIGs. 5 and 6 is a configuration example of a base material-equipped pressure-sensitive adhesive single-coated sheet. A pressure-sensitive adhesive sheet 5 shown in FIG. 5 has a configuration in which a pressure-sensitive adhesive layer 21 is provided on one surface 10A (non-releasable) of a base material 10, and a surface (pressure-sensitive adhesive surface) 21A of this pressure-sensitive adhesive layer 21 is protected by a release liner 31 in which at least the pressure-sensitive adhesive layer side thereof is a release surface. A pressure-sensitive adhesive sheet 6 shown in FIG. 6 has a configuration in which a pressure-sensitive adhesive layer 21 is provided on one surface 10A (non-releasable) of a base material 10. The other surface 10B of the base material 10 is a release surface, and when the pressure-sensitive adhesive sheet 6 is wound up, the pressure-sensitive adhesive layer 21 comes into contact with the other surface 10B, whereby the surface (pressure-sensitive adhesive surface) 21B of the pressure-sensitive adhesive layer is protected by the other surface 10B of the base material 10.

In the base material-equipped pressure-sensitive adhesive single- or double-coated sheet, as the base material for supporting (backing) the pressure-sensitive adhesive layer, use can be made of various resin films made of a polyolefin resin such as polyethylene, a polyester resin such as polyethylene terephthalate (PET), a vinyl chloride resin, a vinyl acetate resin, a polyimide resin, a fluororesin, cellophane, etc.; papers such as a kraft paper and a Japanese paper; cloths such as woven fabrics and nonwoven fabrics made of a single kind or a blended fabric of various fibrous substances of natural fibers, semi-synthetic fibers, or synthetic fibers such as Manila hemp, pulp, rayon, acetate fibers, polyester fibers, polyvinyl alcohol fibers, polyamide fibers, polyolefin fibers, etc.; rubber-made sheets of natural rubber, butyl rubber, etc.; foamed body sheets made of a foamed body formed of polyurethane, a polychloroprene rubber, etc.; metal foils such as an aluminum foil and a copper foil; and complexes thereof. Suitable examples of the base material include resin films such as a polyethylene-made film and a polyester-made film (a polyethylene terephthalate-made film, etc.). The base material may have a single-layered form, or may have a laminated form. In addition, a transparent, translucent or opaque base material can be properly chosen according to the application. The surface of the base material may be subjected to a known or conventional surface treatment of a physical treatment such as a corona discharge treatment or a plasma treatment; or a chemical treatment such as an undercoating treatment or a back surface release treatment. Though a thickness of the base material can be properly chosen according to the purpose, it is in general from 1 μm to 1,000 μm (preferably from 1 μm to 500 μm).

A thickness of the pressure-sensitive adhesive layer may be, for example, from about 1 μm to 1,000 μm (preferably from 1 μm to 200 μm). In the case of a pressure-sensitive adhesive double-coated sheet in which a pressure-sensitive adhesive layer is provided on the both surfaces of a base material, the thickness of the pressure-sensitive adhesive layer as referred to herein means a thickness of the pressure-sensitive adhesive layer per one surface. In one

of the preferred embodiments of the pressure-sensitive adhesive sheet as disclosed herein, the thickness of the pressure-sensitive adhesive layer is from 5 μm to 80 μm (preferably from 10 μm to 70 μm; it may be from 40 μm to 70 μm (for example, about 60 μm)). For example, the pressure-sensitive adhesive sheet of the present invention may be a pressure-sensitive adhesive double-coated sheet in which a pressure-sensitive adhesive layer having the above-mentioned thickness is provided on the both surfaces of a nonwoven fabric; a base material-less pressure-sensitive adhesive double-coated sheet composed of a pressure-sensitive adhesive layer having the above-mentioned thickness; a pressure-sensitive adhesive single-coated sheet having a pressure-sensitive adhesive layer having the above-mentioned thickness on one surface of a base material; and so on.

As the release liner, well-known or conventional release liners in the field of a pressure-sensitive adhesive sheet can be properly chosen and used. For example, use can be suitable made of a release liner having a configuration in which a release layer is given, according to the need, onto the surface of a base material made of the above-mentioned resin film, paper, cloth, rubber sheet, foamed body sheet or metal foil of every sort and kind, or a complex thereof (for example, a sheet of a laminate structure in which an olefin resin is laminated on the both surfaces of paper), or the like. Examples of a raw material of the resin film include polyesters such as polyethylene terephthalate; polyolefins such as polypropylene and an ethylene-propylene copolymer; and thermoplastic resins such as polyvinyl chloride. The resin film may be any of a non-stretched film or a stretched (uniaxially stretched or biaxially stretched) film. A thickness of the release liner can be properly chosen according to the application. As the release layer, release layers which are used as a release layer in a conventional release film (for example, a release layer with a silicone release agent, a release layer with a fluorine release agent, a release layer with a long-chain alkyl release agent, etc.) can be properly adopted.

In the preferred embodiments as disclosed herein, the pressure-sensitive adhesive sheet has such a characteristic that a 180° peeling adhesive force as measured in a measuring environment at 23°C and 50% RH under a condition of a tensile rate of 300 mm/min in accordance with JIS Z0237 (2004) using a stainless steel sheet as an adherend is 3.5 N/20 mm or more (more preferably 4.0 N/20 mm or more). The measurement of this adhesive force can be, for example, preferably carried out by a method described in the Examples as described later.

In one of the preferred embodiments of the pressure-sensitive adhesive sheet as disclosed herein, the pressure-sensitive adhesive sheet further has the following characteristic. That is, in a holding power test in which the pressure-sensitive adhesive sheet is press bonded onto a phenol resin plate at a bonding area of 10 mm in width and 20 mm in length by means of one reciprocation of a roller of 2 kg and held in an environment at 60°C while giving a load of 500 g in the direction parallel to the bonding surface, a holding time is 2 hours or more. This holding power test can be, for example, preferably carried out by a method described in the Examples as described later. This holding power test is carried out using two or more (more preferably three or more) different test pieces, and the case where even one test piece drops within 2 hours is determined to be a shortage of holding power (the holding time is less than 2 hours). A pressure-sensitive adhesive sheet in which in the holding power test, even after elapsing 2 hours, the test pieces are held on the phenol resin plate, and a deviation distance (average value of the respective test pieces) after 2 hours is not more than 0.5 mm is more preferable.

The pressure-sensitive adhesive sheet having such adhesive force and holding power is excellent in bonding force to various adherends, and it can be, for example, preferably applied to adherends such as resins, for example, acrylic resins, polycarbonate resins, polyethylene phthalate resins, etc. and glasses.

The pressure-sensitive adhesive layer formed of the pressure-sensitive adhesive composition as disclosed herein preferably has a gel fraction of the pressure-sensitive adhesive thereof of, for example, from about 20% to 90% (more preferably from 30% to 80%). Conditions such as monomer composition, polymerization rate of the monomer component in the pressure-sensitive adhesive composition, molecular weight of the copolymer to be formed, forming condition of the pressure-sensitive adhesive layer (drying condition, light irradiation condition, etc.), and kind and use amount of crosslinking agent may be properly set up in such a manner that a pressure-sensitive adhesive (pressure-sensitive adhesive after crosslinking) having such a gel fraction is formed even without applying an aging step. When the gel fraction of the pressure-sensitive adhesive is too low, holding power may be liable to become insufficient. On the other hand, when the gel fraction of the pressure-sensitive adhesive is too high, adhesive force or tack is lowered, so that rough surface bonding properties may be liable to become insufficient.

In one of preferred embodiments, the pressure-sensitive adhesive composition as disclosed herein has such a characteristic that an increase of gel fraction as calculated by subtracting a gel fraction as measured regarding a pressure-sensitive adhesive layer formed by applying a drying step (for example, a step of keeping it at a temperature of from about 80°C to 120°C for about 3 minutes) from a gel fraction as measured regarding a pressure-sensitive adhesive layer formed by applying, in addition to the drying step, an aging step (for example, a step of keeping it at 80°C for about 2 days) is not more than 10%. That is, the pressure-sensitive adhesive composition as disclosed herein has such a characteristic that an initial gel fraction as measured immediately after the completion of the drying step falls within the range of from a final gel fraction as measured at the time of completion of the crosslinking reaction of the pressure-sensitive adhesive composition (after applying the aging step) to -10% thereof.

The "gel fraction of the pressure-sensitive adhesive" as referred to herein means a value as measured by the following

method. The gel fraction may be grasped as a weight proportion of an ethyl acetate-insoluble matter in the pressure-sensitive adhesive.

[Measuring method of gel fraction]

About 0.1 g (weight: $W_{a1}$ mg) of an acrylic polymer (which may be a pressure-sensitive adhesive collected from a pressure-sensitive adhesive sheet) as a measuring sample is wrapped in a purse form by a tetrafluoroethylene resin-made porous film having an average pore size of 0.2 μm (weight: $W_{a2}$ mg), and an opening thereof is tied up by a kite string (weight: $W_{a3}$ mg). This package is charged into a screw bottle having a volume of 50 mL (one screw bottle is used per package), and the screw bottle is filled with ethyl acetate. After allowing this to stand at room temperature (typically 23°C) for 7 days, the package is taken out and dried at 130°C for 2 hours, and a weight ($W_{a4}$ mg) of the package is measured. A gel fraction Ga of the acrylic polymer is determined by substituting the respective values for the following expression.

$$Ga\ [\%] = [(W_{a4} - W_{a2} - W_{a3})/W_{a1}] \times 100$$

The acrylic polymer for forming the pressure-sensitive adhesive layer (after crosslinking) preferably has a glass transition temperature (Tg) of from about -70°C to - 10°C, and more preferably from about -55°C to -20°C. When the glass transition temperature is too high, there is a concern that adhesive force is liable to become insufficient, so that floating or stripping takes place at the time of processing or the like. In addition, when the glass transition temperature is too low, there is a concern that heavy peeling is liable to take place in a high-speed release rate (tensile rate) region, resulting in a lowering of work efficiency. The glass transition temperature can be adjusted by, for example, a monomer composition of the acrylic polymer.

## EXAMPLE

The present invention is hereunder described by reference to some Examples. It should be construed that it is not intended to limit the present invention to those shown in such Examples. Incidentally, in the following description, all "parts" and "%" are on a weight basis unless otherwise indicated.

<Example 1>

In a reactor equipped with a cooling pipe, a nitrogen introducing pipe, a thermometer, and a stirrer was charged 22.8 parts of ion-exchanged water, followed by stirring at 60°C for one hour or more while introducing a nitrogen gas thereinto. Subsequently, into this reactor was charged 0.051 parts of 2,2'-azobis[N-(2-carboxyethyl)-2-methylpropioneamidine] hydrate (polymerization initiator; a trade name: VA-057, manufactured by Wako Pure Chemical Industries, Ltd.), and to which was then gradually added dropwise a monomer emulsion over 4 hours while keeping the system at 60°C, thereby allowing an emulsion polymerization reaction to proceed. As the monomer emulsion, an emulsion obtained by adding 48.7 parts ofBA, 2 parts of AA, 3.9 parts of a sodium polyoxyethylene alkyl ether sulfate (a trade name: LATEMUL E-118B, manufactured by Kao Corporation; a non-reactive anionic surfactant of an ether sulfate type; solids content: 26%), and 0.025 parts of t-lauryl mercaptan (chain transfer agent) to 12.6 parts of ion-exchanged water and emulsifying the contents was used. After completion of the dropwise addition of the monomer emulsion, the reaction solution was further maintained at 60°C for 3 hours. Subsequently, the system was cooled to ordinary temperature, and thereafter, a triethylamine (TEA) aqueous solution (neutralizing agent) having a concentration of 5% was added thereto to adjust the system at a pH of 7. To the obtained dispersion liquid (emulsion) of an acrylic polymer was added a 10% aqueous dispersion liquid of a polyisocyanate crosslinking agent (a trade name: TAKENATE WD725, manufactured by Mitsui Chemicals Polyurethanes, Inc.) in an amount of 0.63 parts (as reduced into an active component) based on 100 parts of the raw material monomers constituting the acrylic polymer, thereby obtaining an aqueous dispersion acrylic pressure-sensitive adhesive composition.

This pressure-sensitive adhesive composition was applied on one surface of a PET film having a thickness of 25 μm (a trade name: LUMIRROR S10-25, manufactured by Toray Industries, Inc.) using an applicator (manufactured by Tester Sangyo Co., Ltd.) and dried in an oven with internal air circulation at 120°C for 3 minutes, thereby forming a pressure-sensitive adhesive layer having a thickness of 60 μm. A release liner (a trade name: 75EPS, manufactured by Oji Specialty Paper Co., Ltd.) was laminated on this pressure-sensitive adhesive layer such that the release surface of the release liner came into contact with the pressure-sensitive adhesive layer, thereby obtaining a pressure-sensitive adhesive sheet.

<Example 2>

An aqueous dispersion acrylic pressure-sensitive adhesive composition was obtained in the same manner as that in Example 1, except that the pH after the adjustment with the neutralizing agent was changed to 8. Using this pressure-sensitive adhesive composition, a pressure-sensitive adhesive sheet was obtained in the same manner as that in Example 1.

<Example 3>

An aqueous dispersion acrylic pressure-sensitive adhesive composition was obtained in the same manner as that in Example 1, except that a trimethylamine (TMA) aqueous solution having a concentration of 10% was used as the neutralizing agent. Using this pressure-sensitive adhesive composition, a pressure-sensitive adhesive sheet was obtained in the same manner as that in Example 1.

<Example 4>

An aqueous dispersion acrylic pressure-sensitive adhesive composition was obtained in the same manner as that in Example 1, except that the pH was adjusted at 8 by using aqueous ammonia having a concentration of 10% as the neutralizing agent. Using this pressure-sensitive adhesive composition, a pressure-sensitive adhesive sheet was obtained in the same manner as that in Example 1.

<Example 5>

An aqueous dispersion acrylic pressure-sensitive adhesive composition was obtained in the same manner as that in Example 1, except that the pH was adjusted at 8 by using a diethylamine (DEA) aqueous solution having a concentration of 10% as the neutralizing agent. Using this pressure-sensitive adhesive composition, a pressure-sensitive adhesive sheet was obtained in the same manner as that in Example 1.

<Example 6>

An aqueous dispersion acrylic pressure-sensitive adhesive composition was obtained in the same manner as that in Example 1, except that the pH after the adjustment with the neutralizing agent was changed to 10. Using this pressure-sensitive adhesive composition, a pressure-sensitive adhesive sheet was obtained in the same manner as that in Example 1.

<Example 7>

An aqueous dispersion acrylic pressure-sensitive adhesive composition was obtained in the same manner as that in Example 1, except that aqueous ammonia having a concentration of 10% was used as the neutralizing agent; and that the addition amount of the crosslinking agent was changed to 1.4 parts based on 100 parts of the solids content of the acrylic polymer emulsion. Using this pressure-sensitive adhesive composition, a pressure-sensitive adhesive sheet was obtained in the same manner as that in Example 1.

<Example 8>

An aqueous dispersion acrylic pressure-sensitive adhesive composition was obtained in the same manner as that in Example 1, except that aqueous ammonia having a concentration of 10% was used as the neutralizing agent; and that the addition amount of the crosslinking agent was changed to 5 parts based on 100 parts of the solids content of the acrylic polymer emulsion. Using this pressure-sensitive adhesive composition, a pressure-sensitive adhesive sheet was obtained in the same manner as that in Example 1.

Each of the pressure-sensitive adhesive sheets according to Examples 1 to 8 was maintained at 80°C for 2 days, thereby subjecting it to aging. Before and after this aging step, the sample of each of the pressure-sensitive adhesive sheets was subjected to the following evaluation tests. The obtained results are shown along with physical properties of the pressure-sensitive adhesive composition used in each of the Examples.

[Measurement of gel fraction]

With respect to each of the pressure-sensitive adhesive sheets according to Examples I to 8, a measuring

sample of the pressure-sensitive adhesive was collected from the pressure-sensitive adhesive layer and a gel fraction of the measuring sample was measured in accordance with the above-described method before and after aging at 80°C for 2 days. A difference between the gel fraction after aging and the gel fraction before aging was calculated as an increase of gel fraction.

[Holding power test at 60°C]

With respect to each of the pressure-sensitive adhesive sheets according to Examples 1 to 8, a holding power test was conducted in accordance with JIS Z0237 (2004) before and after aging.
Each of the pressure-sensitive adhesive sheets according to Examples 1 to 8 was cut in a strip form with a width of 10 mm at room temperature (23°C), thereby preparing a test piece. The release liner was removed from this test piece, and the exposed pressure-sensitive adhesive surface was press bonded onto a phenol resin plate as an adhered at a bonding area of 10 mm in width and 20 mm in length by means of one reciprocation of a roller of 2 kg. This test piece was maintained in an environment at 23°C for 30 minutes and then maintained in an environment at 60°C for 30 minutes. Subsequently, the phenol resin plate was hung down, and a load of 500 g was given to a free end (lower edge) of the test piece. The test piece was allowed to stand in a state of being given the load in an environment at 60°C for 2 hours. Three test pieces were prepared from the pressure-sensitive adhesive sheet according to each of the Examples before and after aging respectively, and the holding power test was conducted on the respective test pieces. After elapsing 2 hours, the case where even one of the three test pieces dropped was determined such that the holding time is less than 2 hours (in Table 1, a time until dropping is shown). In other cases, with respect to the three test pieces, a deviation distance (mm) of each of the test pieces from an initial attaching position was measured, and an average value thereof was calculated.

[Measurement of adhesive force to SUS]

In an environment at 23°C, each of the pressure-sensitive adhesive sheets was cut into a size of 20 mm in width and 100 mm in length to prepare a test piece. The release liner was removed from this test piece, and the exposed pressure-sensitive adhesive surface was press bonded onto a stainless steel (SUS304) as an adhered by means of one reciprocation of a rubber roller of 2 kg. This test piece was maintained at 23°C for 30 minutes and then measured for a 180° peeling adhesive force (N/20 mm) in a measuring environment at 23°C and 50% RH under a condition of a tensile rate of 300 mm/min by using a tensile tester in accordance with JIS Z0237 (2004). Three test pieces were prepared from the pressure-sensitive adhesive sheet according to each of the Examples before and after aging respectively, and an average value of the results of measurement of three times using these test pieces was calculated.
Table 1

| Example | Addition amount of crosslinking agent (parts) | Kind of neutralizing agent | pH | Aging | Gel fraction (%) | Increase of gel fraction (%) | Holding power (mm) | Adhesive force (N/20 mm) |
|---|---|---|---|---|---|---|---|---|
| 1 | 0.63 | TEA | 7 | No | 58.9 | - | 0.1 | 4.1 |
| | | | | At 80°C for 2 days | 66.3 | 7.4 | 0.1 | 4.2 |
| 2 | 0.63 | TEA | 8 | No | 58.4 | - | 0.2 | 4.5 |
| | | | | At 80°C for 2 days | 67.1 | 8.7 | 0.1 | 4.0 |
| 3 | 0.63 | TMA | 7 | No | 58.3 | - | 0.4 | 4.0 |
| | | | | At 80°C for 2 days | 64.4 | 6.1 | 0.1 | 4.0 |

(continued)

| Example | Addition amount of crosslinking agent (parts) | Kind of neutralizing agent | pH | Aging | Gel fraction (%) | Increase of gel fraction (%) | Holding power (mm) | Adhesive force (N/20 mm) |
|---|---|---|---|---|---|---|---|---|
| 4 | 0.63 | $NH_3$ | 8 | No | 12.6 | - | 8 minutes | 5.2 |
| | | | | At 80°C for 2 days | 41.6 | 29.0 | 0.85 | 5.0 |
| 5 | 0.63 | DEA | 8 | No | 15.1 | - | 5 minutes | 3.3 |
| | | | | At 80°C for 2 days | 41.6 | 26.5 | 0.4 | 4.5 |
| 6 | 0.63 | TEA | 10 | No | 1.3 | - | 2 minutes | 4.8 |
| | | | | At 80°C for 2 days | 0.0 | -1.3 | 3 minutes | 5.0 |
| 7 | 1.4 | $NH_3$ | 7 | No | 42.9 | - | 2.3 | 4.5 |
| | | | | At 80°C for 2 days | 66.3 | 23.4 | 0.2 | 4.5 |
| 8 | 5.0 | $NH_3$ | 7 | No | 73.1 | - | 0.1 | 2.7 |
| | | | | At 80°C for 2 days | 84.5 | 11.4 | 0.1 | 2.8 |

As shown in Table 1, all of the pressure-sensitive adhesive sheets according to Examples 1 to 3, each using a pressure-sensitive adhesive composition which was prepared by adjusting the pH at less than 10 (here, from about 7 to 8) using a tertiary amine and then adding a polyisocyanate crosslinking agent, exhibited adhesive force of 4.0 N/20 mm or more regardless of the presence or absence of an aging step and also had excellent holding power in a high-temperature environment at 60°C. In addition, as compared with the gel fraction before aging, a change (increase) of the gel fraction after aging was not more than 10%, so that it was perceived that the crosslinking reaction already sufficiently proceeded before the aging step. The pressure-sensitive adhesive sheet of Example 6 which was formed of a pressure-sensitive adhesive composition whose pH was adjusted at 10 with the same neutralizing agent as that in Examples 1 and 2 exhibited a sufficient adhesive force even before aging; however, in the holding power test, the results in which dropping took place within several minutes after the start of the test in both cases before and after aging were revealed, so that a sufficient holding power was not realized.

On the other hand, the pressure-sensitive adhesive sheet of Example 4 which was formed of a pressure-sensitive adhesive composition prepared by blending the crosslinking agent in the same amount as that in Examples 1 to 3 and using aqueous ammonia as the neutralizing agent exhibited a sufficient adhesive force even before aging; however, in the holding power test, dropping took place after 8 minutes before aging, and even after aging, the deviation distance in the holding power test was 0.85 mm, resulting in demonstrating necessity of the aging step. Even in the pressure-sensitive adhesive sheet of Example 7 in which the blending amount of the crosslinking agent is increased two times that in Example 4, the deviation distance in the holding power test was 2.3 mm before aging and 0.2 mm after aging, respectively, resulting in demonstrating necessity of the aging step. Conversely, the pressure-sensitive adhesive sheet of Example 8 in which the blending amount of the crosslinking agent is further increased 8 times that in Example 4 exhibited a sufficient holding power even before aging; however, the results in which adhesive force was insufficient in both cases before and after aging were revealed. In all of the pressure-sensitive adhesive sheets of Examples 4, 5, 7 and 8, the increase of gel fraction after aging was 10% or more, and it was perceived that the crosslinking reaction did not sufficiently proceed before aging.

In the pressure-sensitive adhesive sheet of Example 5 in which a secondary amine was used as the neutralizing agent, both holding power and adhesive force before aging were insufficient. In view of the fact that after aging, sufficient

holding power and adhesive force were realized, and the increase of gel fraction after aging was very high as 26.5%, necessity of the aging step was perceived.

While the present invention has been described in detail and with reference to the specific embodiments thereof, it will be apparent to one skilled in the art that various changes and modifications can be made therein without departing from the spirit and scope thereof.
The present application is based on Japanese Patent Application No.2011-195491 filed on September 7, 2011, and the entire contents are incorporated herein by reference. All references cited herein are incorporated in their entirety.

**DESCRIPTION OF REFERENCE NUMERALS AND SIGNS**

1, 2, 3, 4, 5, 6: Pressure-sensitive adhesive sheet
10: Base material
21, 22: Pressure-sensitive adhesive layer
31, 32: Release liner

**Claims**

**1.** A pressure-sensitive adhesive composition comprising:

an aqueous solvent,
an acrylic polymer dispersed in the aqueous solvent,
a polyisocyanate crosslinking agent, and
a tertiary amine as a neutralizing agent, wherein
the composition has a liquid phase with a pH of less than 10.

**2.** The composition according to claim 1, wherein
the acrylic polymer is an emulsion copolymer of an alkyl (meth)acrylate as a major monomer and a carboxyl group-containing monomer as a minor monomer.

**3.** The composition according to claim 1 or 2, wherein
the crosslinking agent is blended in an amount of from 0.01 parts by weight to 10 parts by weight based on 100 parts by weight of a whole raw material monomer of the acrylic polymer.

**4.** The composition according to any one of claims 1 to 3, wherein
the tertiary amine has a solubility in water of 1 g/100 g or more at 25°C.

**5.** The composition according to any one of claims 1 to 4, wherein
the tertiary amine is at least one selected from the group consisting of triethylamine and trimethylamine.

**6.** The composition according to any one of claims 1 to 5, wherein
the pH of the liquid phase is 5 to 9.

**7.** A pressure-sensitive adhesive sheet comprising a pressure-sensitive adhesive layer formed of the pressure-sensitive adhesive composition of any one of claims 1 to 6.

**8.** The pressure-sensitive adhesive sheet according to claim 7, wherein
the pressure-sensitive adhesive layer has a gel fraction of the pressure-sensitive adhesive of from 20% to 90%.

**9.** A method for manufacturing a pressure-sensitive adhesive composition, comprising:

preparing a dispersion liquid in which an acrylic polymer is dispersed in an aqueous solvent;
adding a tertiary amine as a neutralizing agent into the dispersion liquid to adjust a pH to less than 10; and
adding a crosslinking agent into the dispersion liquid.

FIG. 1

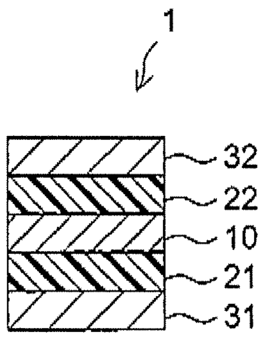


FIG. 2

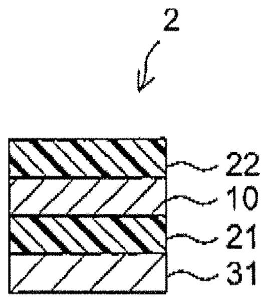


FIG. 3

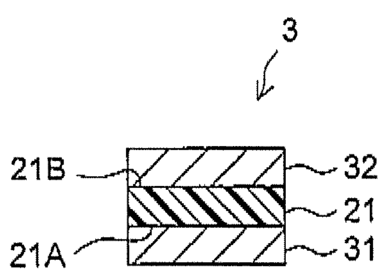

FIG. 4

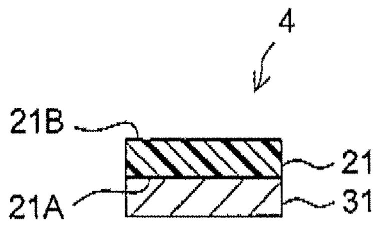


FIG. 5

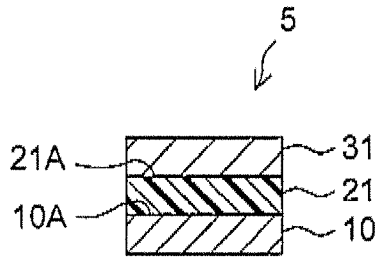


FIG. 6

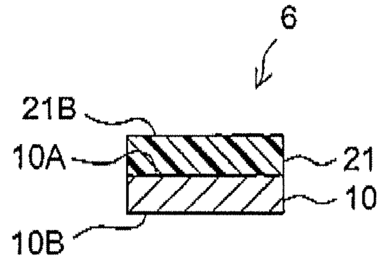

Europäisches Patentamt
European Patent Office
Office européen des brevets

# EUROPEAN SEARCH REPORT

Application Number
EP 12 18 3241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI<br>Week 199047<br>Thomson Scientific, London, GB;<br>AN 1990-351457<br>XP002687827,<br>& JP 2 252778 A (TOYODA GOSEI KK)<br>11 October 1990 (1990-10-11)<br>* abstract *<br>----- | 1,2,4,5,<br>7,9 | INV.<br>C09J133/08 |
| X | DATABASE WPI<br>Week 199202<br>Thomson Scientific, London, GB;<br>AN 1992-011411<br>XP002687828,<br>& JP 3 259983 A (TOYODA GOSEI KK)<br>20 November 1991 (1991-11-20)<br>* abstract *<br>----- | 1,2,4,5,<br>7,9 | |
| A | DATABASE WPI<br>Week 199734<br>Thomson Scientific, London, GB;<br>AN 1997-369747<br>XP002687829,<br>& JP 9 157624 A (SANYO CHEM IND LTD)<br>17 June 1997 (1997-06-17)<br>* abstract *<br>----- | 1,2,4,5 | TECHNICAL FIELDS SEARCHED (IPC)<br>C09J<br>C08K |

The present search report has been drawn up for all claims

| Place of search | Date of completion of the search | Examiner |
|---|---|---|
| Munich | 23 November 2012 | Miao, Kathryn |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 12 18 3241

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2012

| Patent document cited in search report | Publication date | Patent family member(s) | Publication date |
|---|---|---|---|
| JP 2252778 A | 11-10-1990 | NONE | |
| JP 3259983 A | 20-11-1991 | NONE | |
| JP 9157624 A | 17-06-1997 | JP 3065923 B2 | 17-07-2000 |
| | | JP 9157624 A | 17-06-1997 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9157623 A
- JP 2010248465 A
- JP 2010163526 A
- JP 2004231676 A
- JP 2011195491 A